# EUROPEAN PATENT SPECIFICATION

(11) **EP 4 614 870 B1**
(45) Date of publication and mention of the grant of the patent: **12.08.2026**
(21) Application number: 25159469.3
(22) Date of filing: 21.02.2025
(51) Int. Cl.: H04L 9/00, G06F 7/58

(54) **GENERATION OF A UNIFORMLY RANDOM VECTOR**
ERZEUGUNG EINES UNIFORM ZUFÄLLIGEN VEKTORS
GÉNÉRATION D'UN VECTEUR UNIFORMÉMENT ALÉATOIRE

(30) Priority: 08.03.2024 FR 2402329
(43) Date of publication of application: 10.09.2025
(73) Proprietor: STMicroelectronics International N.V., 1228 Plan-les-Ouates, Geneva (CH)
(72) Inventor: SIMON, Thierry, 1300 Wavre (BE); MARZOUGUI, Soundes, 1200 Saint-Lambert (BE); TUTS, Kristoffel, 3440 Dormaal (BE)
(74) Representative: Cabinet Beaumont

(56) References cited:
- CN-A- 116 611 096
- US-A1- 2009 204 656
- US-A1- 2017 124 323

## Description

### Technical field

The present disclosure relates generally to electronic systems and devices, and more particularly to the security of such systems and devices. The present disclosure relates, more precisely, to cryptographic methods and to their implementation.

### Background art

Different techniques for authenticating and/or ensuring the integrity of secret and/or sensitive data are used nowadays. Digital signatures are one of them, and consist of the application of one or more cryptographic algorithms to data, such as sensitive data. Many cryptographic algorithms, and more especially many asymmetric cryptographic algorithms use uniformly random data.

In certain cases, these data are generated periodically, for example each time a data signature process is implemented. It may then be necessary to secure the generation of these uniformly random data.

United States patent application publication document US 2009/204656 A1 discloses the secure generation of pseudo random bit sequences based on a plurality of feedback shift registers.

Chinese patent application publication document CN 116611096 A discloses the protection of a random number number generator from fault injection attacks involving a masking step.

It would be desirable to be able to improve at least in part certain aspects of the generation of uniformly random data.

### Summary of Invention

There is a need for more robust generation method of uniformly random data, and, in particular, uniformly random vector.

There is a need for generation method of uniformly random data, and, in particular, uniformly random vector, that are secured against single fault injection attacks and multiple faults' injection attacks.

There is a need for an electronic device capable of executing such a generation method.

One embodiment addresses all or some of the drawbacks of known generation methods of uniformly random data, and, in particular, known generation methods of uniformly random vector.

One embodiment provides a generation method of uniformly random data, and, in particular, a uniformly random vector.

One embodiment provides an electronic device capable of implementing such a generation method.

One embodiment provides a generation method, adapted to be executed by an electronic device, of an first uniformly random vector comprising n first elements, n being an integer equal or greater than two, each first element being comprised in a finite set T, comprising the following steps:
- Generate a second uniformly random vector comprising n second elements;
- Generate m third elements, m being an integer equal or greater than one;
- Generate m third uniformly random vectors ranked from zero to m-1, wherein third uniformly random vector ranked k, k being an integer comprised between zero and m-1, comprises k third elements and n-k second elements, each third uniformly random vector having third elements different from the second elements at the same position in the second uniformly random vector and the other third uniformly random vectors;
- Calculate said first elements by applying an unmasking function to said second elements and to said m third elements.

Another embodiment provides an electronic device capable of implementing a generation method of a uniformly random first vector comprising n first elements, n being an integer equal or greater than two, each first element being comprised in a finite set T, comprising the following steps:
- Generate a second uniformly random vector comprising n second elements;
- Generate m third elements, m being an integer equal or greater than one;
- Generate m third uniformly random vectors ranked from zero to m-1, wherein third uniformly random vector ranked k, k being an integer comprised between zero and m-1, comprises k third elements and n-k second elements, each third uniformly random vector having third elements different from the second elements at the same position in the second uniformly random vector and the other third uniformly random vectors;
- Calculate said first elements by applying an unmasking function to said second elements and to said m third elements.

According to an embodiment, the generation step of said third uniformly random vector ranked k comprises the following steps:
- Use the n first elements;
- Shift said n first elements of at least k steps;
- Replace at least k elements from the first elements by k elements from the third elements.

According to an embodiment, each first, second and third elements are chosen in a finite set.

According to an embodiment, said first vector is a commitment vector of the Dilithium algorithm.

Another embodiment provides an execution method of a cryptographic algorithm comprising said generation method described previously.

According to an embodiment, said cryptographic algorithm is a signature method.

According to an embodiment, said cryptographic algorithm is the Dilithium algorithm.

### Brief description of drawings

The foregoing features and advantages, as well as others, will be described in detail in the following description of specific embodiments given by way of illustration and not limitation with reference to the accompanying drawings, in which:
Figure 1 illustrates, schematically and in bloc form, an embodiment of an electronic device configured to execute the methods of figures 3 and 5;
Figure 2 illustrates, schematically and in bloc form, a masking function and an unmasking function;
Figure 3 illustrates, in bloc form, an embodiment of a generation method of a uniformly random vector;
Figure 4 illustrates, in bloc form, a fault injection attack upon the embodiment of figure 3;
Figure 5 illustrates, in bloc form, another embodiment of a generation method of a uniformly random vector; and
Figure 6 illustrates, in bloc form, a fault injection attack upon the embodiment of figure 5.

### Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail. In particular, cryptographic algorithms using the embodiments described hereafter are not detailed hereafter. These implements of cryptographic algorithms are obvious for the person skilled in the art based on the following disclosure.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 %, and preferably within 5 %.

The above described embodiments concern the generation of a uniformly random data, and more particularly the generation of a uniformly random vector. Such a data or vector can be used during the execution of a cryptographic algorithm, such as a signature algorithm. Moreover, the above described embodiments concern a generation method, and the electronic device executing it, that is resistant to single and multiple faults injection attacks.

Moreover, the above described embodiments are particularly adapted to the generation of uniformly random vectors that are used by cryptographic algorithm such as any signature algorithm that is not deterministic, for example the Dilithium algorithm, the ECDSA algorithm or the qTESLA algorithm.

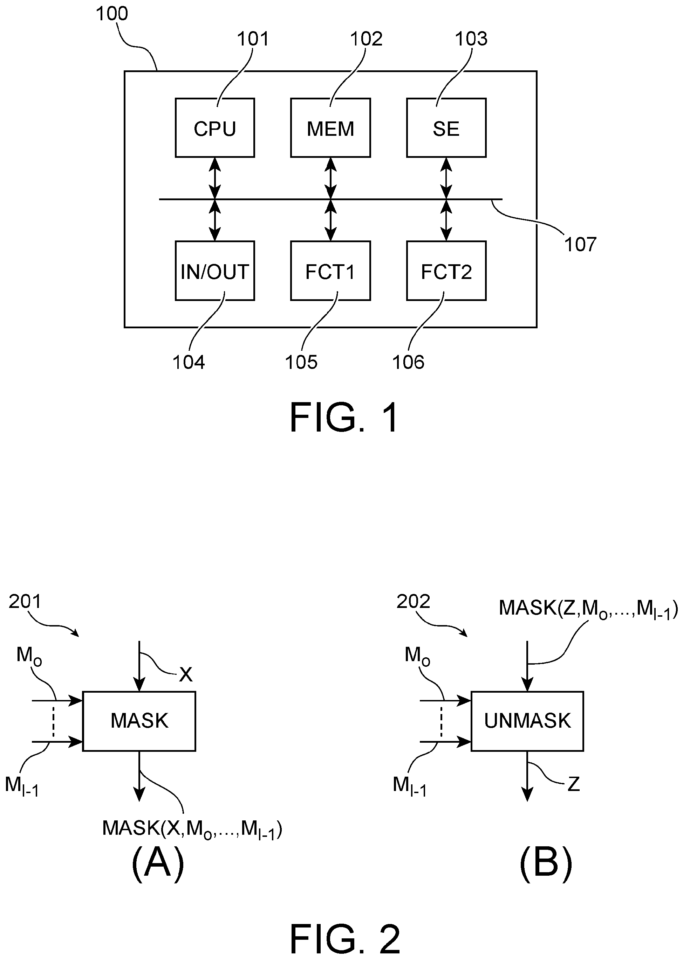

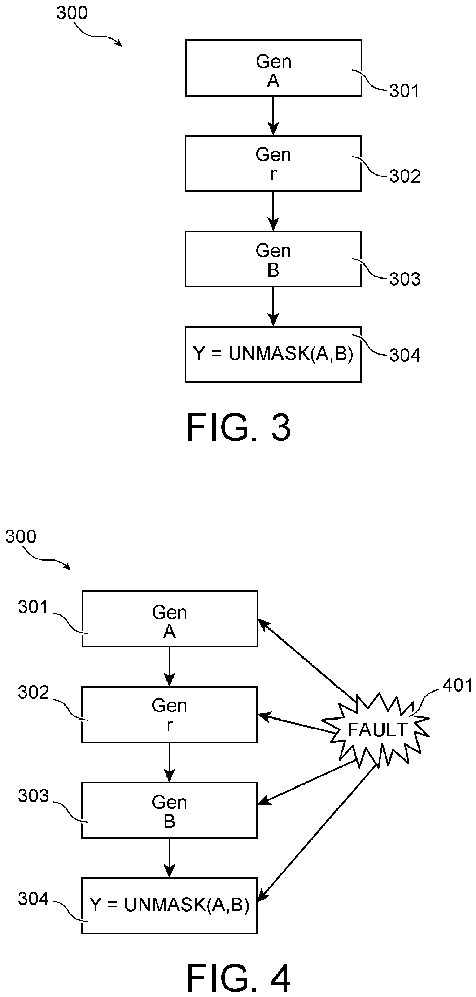

Figure 1 shows, very schematically and in block form, an electronic device 100 capable of implementing the generation method of a uniformly random vector described in relation with Figures 3 to 6.

Device 100 is an electronic device adapted to processing data, and more particularly, to execute algorithm using uniformly random data, and to generate such uniformly random data. For example, device 100 is capable of executing cryptographic algorithm.

Device 100 comprises a processor 101 (CPU) capable of processing data. According to an example, device 100 may comprise a plurality of processors, each adapted to processing different types of data. According to a specific example, device 100 may comprise at least one processor that is adapted to execute algorithm using uniformly random data, and to generate such uniformly random data.

Device 100 further comprises one or a plurality of memories 102 (MEM) into which are stored data, for example, critical data. According to an example, device 100 comprises a plurality of types of memories, such as a ROM, a RAM, a volatile memory, and/or a non-volatile memory. According to a specific example, device 100 may comprise one or more memories that are trusted by the processor 101 and that have a secure access to the processor 101. According to an embodiment, device 100 comprises one or more external memories, or untrusted memories, that do not have a secure access to the processor 101.

Device 100 further comprises one or more secure element 103 (SE) adapted to processing critical and/or secret data. Secure element 103 may comprise its own processor(s), its own memory or memories, etc. According to an example, the one or more secure elements 103 are capable of executing algorithm using uniformly random data, and generating uniformly random data.

Device 100 further and optionally comprises one or a plurality of input/output circuits 104 (I/O) enabling device 100 to transmit and/or to receive data and/or energy with one or a plurality of external electronic devices.

Device 100 further comprises one or a plurality of circuits 105 (FCT1) and 106 (FCT2) implementing one or a plurality of functionalities of device 100. According to an example, circuits 105 and 106 may comprise specific data processing circuits, such as signature generation circuits, or circuits enabling to perform measurements, such as sensors. According to an example, the circuits 105 and 106 are capable of executing algorithm using uniformly random data, and generating uniformly random data.

Device 100 further comprises one or a plurality of communication buses 107 enabling all the circuits of device 100 to communicate. In Figure 1, a single bus 107 coupling processor 101, memory or memories 102, secure element 103, and circuits 104 to 106 is shown, but in practice, device 100 comprises a plurality of communication buses coupling these different elements.

Figure 2 comprises two views (A) and (B) each representing, very schematically and in bloc forms, respectively, a masking function 201 and an unmasking function 202.

Masking function 201 (MASK) takes at least two types of inputs: a data X and l masks M₀, ..., Mₗ₋₁, l being an integer greater than or equal to one (1), and provides a masked data MASK (X, M₀, ..., Mₗ₋₁). Data X, masks M₀, ..., Mₗ₋₁, and masked data MASK (X, M₀, ..., Mₗ₋₁) are of the same nature, such as vector comprising the same number of elements. Masking function 201 is constructed in order to provide a masked data MASK (X, M₀, ..., Mₗ₋₁) that is statistically independent from the data X and that is statistically independent from masks M₀, ..., Mₗ₋₁.

Unmasking function 202 (UNMASK) takes at least two types of inputs: a masked data Z and l masks M₀, ..., Mₗ₋₁, and provides an unmasked data UNMASK(Z, M₀, ..., Mₗ₋₁). Masked data Z, masks M₀, ..., Mₗ₋₁ and unmasked data UNMASK(Z, M₀, ..., Mₗ₋₁) are of the same nature, such as vector comprising the same number of elements. Unmasking function 202 is constructed such that for fixed masks M₀, ..., Mₗ₋₁ the composition of the masking and the unmasking functions acts like the identity function. In other words, unmasking the masked value MASK (X, M₀, ..., Mₗ₋₁) with the masks M₀, ..., Mₗ₋₁ gives back data X.

Furthermore, the unmasking function 202 can be used for generating a uniformly random data, and especially a uniformly random vector. In this disclosure, it is called a uniformly random data, a data obtained through a method choosing an element of the set such that every element is equally likely to be obtained . Moreover, a uniformly random vector is a vector obtained through a method that independently selects its elements as a uniformly random data.

If the masked data Z and/or masks M₀, ..., Mₗ₋₁ have been proven to be uniformly random and are independent from each other, then the unmasked data UNMASK(Z, M₀, ..., Mₗ₋₁) is also uniformly random. Thus, choosing l+1 uniformly random data and applying to them the unmasking function 202 is a way to generate another uniformly random data. This property is used in the embodiments described in relation with figures 3 to 6.

The masking mechanism is well-known, and practical examples of this mechanism are the Boolean masking and the arithmetic masking. Other kind of masking mechanisms are obvious for the person skilled in the art.

Figure 3 is a bloc diagram representing a first embodiment of a generation method 300 of a uniformly random vector Y.

The uniformly random vector Y comprises n elements y₀, ..., yₙ₋₁, each element y₀, ..., yₙ₋₁ being from a finite set T. n is an integer greater or equal to two. Thus, the vector Y can be seen as an element of the finite set Tⁿ.

According to an example, vector Y can be a commitment vector of the Dilithium algorithm.

At an initial step 301 (Gen A), a uniformly random vector A from finite set Tⁿ is generated. Vector A comprises n elements a₀, ..., aₙ₋₁. In other words, at step 301 n uniformly random elements a₀, ..., aₙ₋₁ from set T are generated and are used to form the uniformly random vector A. According to an embodiment, elements a₀, ..., aₙ₋₁ are all independent from each other.

At a step 302 (Gen r), following step 301, another uniformly random element r from set T is generated. According to an embodiment, element r is independent from each element a₀, ..., aₙ₋₁.

At a step 303 (Gen B), following step 302, a uniformly random vector B from finite set Tⁿ is constructed by using the element r and only n-1 elements from elements a₀, ..., aₙ₋₁. Vector B comprises n elements b₀, ..., bₙ₋₁.

Vector B is obtained by shuffling elements a₀, ..., aₙ₋₁ and replacing one of these elements by element r. According to an embodiment, all elements that are common from vectors A and B have a different place.

According to a preferred embodiment, vector B is obtained by shifting the position of elements a₀, ..., aₙ₋₁ of at least one step, and then by replacing one of these elements by element r. According to a practical example, vector B can be given by the following mathematical formula: $B = \left({b}_{0},…,{b}_{n - 1}\right) = \left(r,{a}_{0},…,{a}_{n - 2}\right)$

In this case, vector B is obtained by shifting the position of elements a₀, ..., aₙ₋₁ of one step, and by replacing element aₙ₋₁ by element r.

Each element bᵢ of vector B is independent from the element aᵢ of vector A.

At a step 304 (Y=UNMASK(A,B)), following step 303, the uniformly random vector Y is generated by using vectors A and B, and the unmasking function 202 described in relation with figure 2 wherein l is equal to one (1). Each element yᵢ of the vector Y is given by the following mathematical formula: ${y}_{i} = UNMASK \left({a}_{i}, {b}_{i}\right)$

Elements aᵢ and bᵢ are independent and uniformly random, thus, element yᵢ is also uniformly random. Since the elements y₀, ..., yₙ₋₁ are independent and uniformly random, Y is a uniformly random vector.

A first advantage of this generation method is that this method is resistant to single fault injection attacks. This advantage is described in more details in relation with figure 4.

A second advantage of this generation method is that it uses the generation of only n+1 uniformly random elements even though, by using the unmasking function 202. A naive solution based on the unmasking function 202 that is robust against a single fault injection would require 2*n uniformly random elements.

Figure 4 represents a block diagram illustrating a single fault injection attack upon the generation method of figure 3.

Fault injection attack are a class of physical attacks that can be conducted against a device, such as device 100 of Figure 1, in order to modify the way the device operates. These types of attacks are mostly used for malicious purposes such as extraction of sensitive data. During a single fault injection attack, a person can modify the value of a data, and more particularly, can modify the value of several bits forming said data. During a multiple faults' injection attack, a person can modify the value of several data, and more particularly, can force the value of several bits forming said several data.

Concerning the generation method 300 of figure 3, a single fault injection attack can occur during any step of the method. On other words, a fault 401 (FAULT) can be injected at any step of the method 300.

Concerning the generation method 300, a single fault injection attack can modify the value of vector A. It means that one element aᵢ of vector A has been replaced by another element t that is not uniformly random. Thus, vector A is given by the following mathematical formula: $A = \left({a}_{0},…,{a}_{i},…,{a}_{n - 1}\right) = \left({a}_{0},…,t,…,{a}_{n - 1}\right)$

Such a fault can be injected at any step of method 300. When this fault is injected before 303, vector B can be potentially generated by using the element t. However, as said earlier, all elements that are common from vector A and B have a different place. Thus, each element y₀, ..., yₙ₋₁ of vector Y is given by the result of the application of the unmasking function 202 to a uniformly random element and another independent element that is not necessarily uniformly random. Vector Y is thus still comprising only uniformly random and independent elements.

According to the practical example of the preferred embodiment described before, vector B is given by the following mathematical formula: $B = \left({b}_{0},…{b}_{i + 1},…,{b}_{n - 1}\right) = \left(r,{a}_{0},…,{a}_{i},…,{a}_{n - 2}\right) = \left(r,{a}_{0},…,t,…,{a}_{n - 2}\right)$

Element t is placed at the place of element bᵢ₊₁ of vector B. Element yᵢ₊₁ is given by the result of the application of unmasking function 202 to the element bᵢ₊₁ = t and the uniformly random element aᵢ₊₁. Thus, element yᵢ₊₁ is also uniformly random, and the single fault injection attack does not have an exploitable result.

When a single fault injection attack modifies the value of vector B, it means that element bᵢ of vector B, meaning element r or an element of vector A used for generating vector B, has been replaced by the other element t that is not uniformly random.

According to the practical example of the preferred embodiment described before, vector B is given by the following mathematical formula: $B = \left({b}_{0},…,{b}_{n - 1}\right) = \left(t,{a}_{0},…,{a}_{n - 2}\right)$

In that case, only vector B is impacted by the fault injection. Vector A is still uniformly random. Thus, vector Y is also uniformly random, and the single fault injection attack does not have an exploitable result.

Furthermore, a fault could be injected to directly modify vector Y, for example, if it is injected during step 304. However, the person skilled in the art knows that such an attack can be avoided, for example by using any computation on vector Y implemented in a masked fashion by only using the vectors A and B.

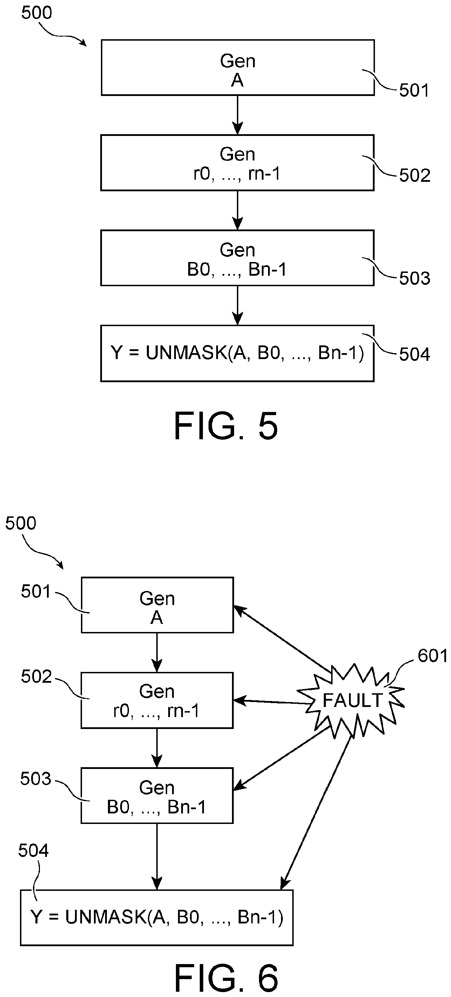

Figure 5 is a bloc diagram representing a second embodiment of a generation method 500 of the uniformly random vector Y.

The generation method 500 is similar to the generation method 300 described in details in relation with figure 3. Common features of methods 300 and 500 are not detailed again hereafter, only their differences are highlighted.

As said earlier, the uniformly random vector Y comprises n elements y₀, ..., yₙ₋₁, each element y₀, ..., yₙ₋₁ being from the finite set T.

At an initial step 501 (Gen A), the uniformly random vector A comprising n elements a₀, ..., aₙ₋₁ is generated. According to an embodiment, elements a₀, ..., aₙ₋₁ are all independent from each other.

At a step 502 (Gen r₀, ..., rₘ₋₁), following step 501, m uniformly random elements r₀, ..., rₘ₋₁ from set T are generated. m is an integer equal or greater than one (1). According to an embodiment, elements r₀, ..., rₘ₋₁ are each independent from each other and from each element of elements a₀, ..., aₙ₋₁.

At a step 503 (Gen B₀, ..., Bₘ₋₁) , following step 502, m uniformly random vectors B₀, ..., Bₘ₋₁ from finite set Tⁿ are constructed by using elements r₀, ..., rₘ₋₁ and elements a₀, ..., aₙ₋₁. Each vector Bₖ comprises n elements b_{k,0}, ..., b_{k,n-1}, k being an integer comprised between zero and m-1.

More particularly, the uniformly random vector Bₖ ranked k comprises k elements from elements r₀, ..., rₘ₋₁ and n-k elements from elements a₀, ..., aₙ₋₁, and each vector B₀, ..., Bₘ₋₁ has its elements disposed in a different order. More particularly, at every position, all the elements from vectors A, B₀, ..., Bₘ₋₁ are different.

Thus, at every position, the elements from vectors A, B₀, ..., Bₘ₋₁ are uniformly random and independent from each other.

According to a preferred embodiment, vector Bₖ ranked k is obtained by shifting the position of elements a₀, ..., aₙ₋ₖ of at least k steps, and then by replacing one of these elements by k elements of elements r₀, ..., rₘ₋₁. According to a practical example, vector Bₖ can be given by the following mathematical formula: $B = \left({b}_{0},…{b}_{k - 1},{b}_{k},{b}_{n - 1}\right) = \left({r}_{0},…,{r}_{k - 1},{a}_{0},…,{a}_{n - k - 1}\right)$

In this case, vector Bₖ is obtained by shifting the position of elements a₀, ..., aₙ₋₁ of k steps, and by replacing element aₙ₋ₖ to aₙ₋₁ by element r₀, ..., rₖ₋₁.

At a step 504 (Y=UNMASK(A,B₀, ..., Bₘ₋₁)), following step 503, the uniformly random vector Y is generated by using vectors A and B₀, ..., Bₘ₋₁, and the unmasking function 202 described in relation with figure 2, wherein l is equal to m. Thus, each element yᵢ, is given by the following mathematical formula: $yi = UNMASK \left({a}_{i},{b}_{0 , i},…,{b}_{m - 1 , i}\right)$

Elements aᵢ, b_{0,i}, ..., b_{m-1,i} are independent from each other and uniformly random, thus, element yᵢ is also uniformly random. Since the elements y₀, ..., yₙ₋₁ are independent and uniformly random, Y is a uniformly random vector.

Figure 6 is a block diagram illustrating a multiple faults' injection attack upon the generation method 500 of figure 5.

As said earlier, fault injection attacks are a class of physical attacks that can be conducted against a device. During a multiple faults' injection attack, a person can modify the value of several data, and more particularly, can modify the value of several bits forming said several data. It is considered here a faults' injection attack wherein m faults are injected.

Concerning the generation method 300, a multiple faults' injection attack can modify the value of vector A and/or vector B₀, ..., Bₘ₋₁.

When a multiple faults' injection attack modifies only the value of vector A, it means that m elements aᵢ of vector A have been replaced by m other elements t₀, ..., tₘ₋₁ that are not uniformly random. Such faults can be injected at any step of method 500. When this fault is injected before 503, vectors B₀, ..., Bₘ₋₁ can be potentially generated by using some of the m elements t₀, ..., tₘ₋₁. However, as said earlier, all elements that are common from vector A and B₀, ..., Bₘ₋₁ have a different place. Thus, each element y₀, ..., yₙ₋₁ of vector Y is given by the result of the application of the unmasking function 202 to a uniformly random element and m other elements that are not necessarily uniformly random. Vector Y is thus still comprising only uniformly random and independent elements.

According to a preferred embodiment, when m faults are injected during the generation method 500, at most m elements from r₀, ..., rₖ, a₀, ..., aₙ₋₁ of vectors Bₖ are modified. At every position, since the (m+1) elements of the vectors A, B₀, ..., Bₘ₋₁ are different and chosen from r₀, ..., rₖ, a₀, ..., aₙ₋₁, there must be at least one element that is not modified by the faults and is still uniformly random. Thus, each element y₀, ..., yₙ₋₁ of vector Y obtained as the result of the application of the unmasking function 202 to independent elements of which at least one is uniformly random, is still uniformly random. Therefore, vector Y comprising only uniformly random elements is still uniformly random.

When a multiple faults' injection attack modifies only the value of vectors B₀, ..., Bₘ₋₁, it means that elements b₀ᵢ, ..., bₘ₋₁ᵢ of vectors B₀, ..., Bₘ₋₁ have been replaced by other elements t₀, ..., tₘ₋₁ that are not uniformly random. In that case, only vectors B₀, ..., Bₘ₋₁ are impacted by the fault injection. Vector A is still uniformly random. Thus, vector Y is also uniformly random, and the multiple faults' injection attack does not have an exploitable result.

When a multiple faults' injection attack modifies directly the value of vector A and the value of vectors B₀, ..., Bₘ₋₁, it means that m elements amongst elements ai of vector A and elements b₀ᵢ, ..., bₘ₋₁ᵢ of vectors B₀, ..., Bₘ₋₁ have been replaced by m other elements t₀, ..., tₘ₋₁ that are not uniformly random. However, as said earlier, at every position, since the (m+1) elements of the vectors A, B₀, ..., Bₘ₋₁ are different and chosen from r₀, ..., rₖ, a₀, ..., aₙ₋₁, there must be at least one element that is not modified by the faults and is still uniformly random. Thus, each element y₀, ..., yₙ₋₁ of vector Y obtained as the result of the application of the unmasking function 202 to independent elements of which at least one is uniformly random, is still uniformly random. Therefore, vector Y comprising only uniformly random elements is still uniformly random.

Furthermore, faults could be injected to directly modify vector Y, for example, if it is injected during step 504. However, the person skilled in the art knows that such an attack can be avoided, for example by using any computation on vector Y implemented in a masked fashion by only using the vectors A and B₀, ..., Bₘ₋₁.

Various embodiments and variants have been described. Those skilled in the art will understand that certain features of these embodiments can be combined and other variants will readily occur to those skilled in the art.

Finally, the practical implementation of the embodiments and variants described herein is within the capabilities of those skilled in the art based on the functional description provided hereinabove.

The scope of protection is defined by the claims.

## Claims

1. A generation method, adapted to be executed by an electronic device, of an first uniformly random vector (Y) comprising n first elements (y₀, ..., yₙ₋₁), n being an integer equal or greater than two, each first element being comprised in a finite set T, comprising the following steps:
- Generate a second uniformly random vector (A) comprising n second elements (a₀, ..., aₙ₋₁) ;
- Generate m third elements (r; r₀, ... rₘ₋₁), m being an integer equal or greater than one;
- Generate m third uniformly random vectors (B; B₀, ..., Bₘ₋₁) ranked from zero to m-1, wherein third uniformly random vector (Bₖ) ranked k, k being an integer comprised between zero and m-1, comprises k third elements and n-k second elements, each third uniformly random vector (B; B₀, ..., Bₘ₋₁) having third elements (b₀, ..., bₙ₋₁; bi₀, ..., bᵢₙ₋₁) different from the second elements at the same position in the second uniformly random vector (A) and the other third uniformly random vectors (B; B₀, ..., Bₘ₋₁);
**characterized by** further comprising the following step:
- Calculate said first elements (y₀, ..., yₙ₋₁) by applying an unmasking function to said second elements (a₀, ..., aₙ₋₁) and to said m third elements (b₀, ..., bₙ₋₁; bi₀, ..., bᵢₙ₋₁).

2. An electronic device adapted to implement a generation method of a uniformly random first vector (Y) comprising n first elements (y₀, ..., yₙ₋₁) , n being an integer equal or greater than two, each first element being comprised in a finite set T, comprising the following steps:
- Generate a second uniformly random vector (A) comprising n second elements (a₀, ..., aₙ₋₁);
- Generate m third elements (r; r₀, ... rₘ₋₁), m being an integer equal or greater than one;
- Generate m third uniformly random vectors (B; B₀, ..., Bₘ₋₁) ranked from zero to m-1, wherein third uniformly random vector (Bₖ) ranked k, k being an integer comprised between zero and m-1, comprises k third elements and n-k second elements, each third uniformly random vector (B; B₀, ..., Bₘ₋₁) having third elements (b₀, ..., bₙ₋₁; bi₀, ..., bᵢₙ₋₁) different from the second elements at the same position in the second uniformly random vector (A) and the other third uniformly random vectors (B; B₀, ..., Bₘ₋₁);
**characterized by** further comprising the following step:
- Calculate said first elements (y₀, ..., yₙ₋₁) by applying an unmasking function to said second elements (a₀, ..., aₙ₋₁) and to said m third elements (b₀, ..., bₙ₋₁; bi₀, ..., bᵢₙ₋₁).

3. Method according to claim 1 or device according to claim 2, wherein, the generation step of said third uniformly random vector (B; Bₖ) ranked k comprises the following steps:
- Use the n first elements (a₀, ..., aₙ₋₁);
- Shift said n first elements of at least k steps;
- Replace at least k elements from the first elements (a₀, ..., aₙ₋₁) by k elements from the thirds elements (r₀, ..., rₘ₋₁).

4. Method according to claim 1 or 3, or device according to claim 2 or 3, wherein, each first, second and third elements are chosen in a finite set.

5. Method according to any of claims 1, 3 or 4, or device according to any of claims 2 to 4, wherein, said first vector is a commitment vector of the Dilithium algorithm.

6. An execution method of a cryptographic algorithm comprising said generation method according to any of claims 1, 3 to 5.

7. Method according to claim 6, wherein said cryptographic algorithm is a signature method.

8. Method according to claim 6 or 7, wherein said cryptographic algorithm is the Dilithium algorithm.

## Patentansprüche

1. Ein Erzeugungsverfahren, eingerichtet zum Ausführen durch eine elektronische Einrichtung, eines ersten gleichförmig zufälligen Vektors (Y), der n erste Elemente (y₀, ..., yₙ₋₁) aufweist, wobei n eine ganze Zahl gleich oder größer als zwei ist, wobei jedes erste Element in einer endlichen Menge T enthalten ist, wobei das Verfahren Folgendes aufweist:
- Erzeugen eines zweiten gleichförmig zufälligen Vektors (A), der n zweite Elemente (a₀, ..., aₙ₋₁) aufweist;
- Erzeugen von m dritten Elementen (r; r₀, ..., rₙ₋₁), wobei m eine ganze Zahl gleich oder größer als eins ist;
- Erzeugen von m dritten gleichförmig zufälligen Vektoren (B; B₀, ..., Bₘ₋₁), geordnet von null bis m-1, wobei ein dritter gleichförmiger zufälliger Vektor (Bₖ) mit dem Rang k, wobei k eine ganze Zahl ist, die zwischen null und m-1 enthalten ist, k dritte Elemente und n-k zweite Elemente aufweist, wobei jeder dritte gleichförmig zufällige Vektor (B; B₀, ..., Bₘ₋₁) dritte Elemente (b₀, ..., bₙ₋₁; bi₀, ..., bᵢₙ₋₁) aufweist, die sich von den zweiten Elementen an der gleichen Position im zweiten gleichförmig zufälligen Vektor (A) und den anderen dritten gleichförmig zufälligen Vektoren (B; B₀, ..., Bₘ₋₁) unterscheiden;
**dadurch gekennzeichnet, dass** er ferner den folgenden Schritt aufweist:
- Berechnen der ersten Elemente (y₀, ..., yₙ₋₁) durch Anwenden einer Demaskierungsfunktion auf die zweiten Elemente (a₀, ..., aₙ₋₁) und auf die m dritten Elemente (b₀, ..., bₙ₋₁; bi₀, ..., biₙ₋₁).

2. Eine elektronische Einrichtung, eingerichtet zum Implementieren eines Erzeugungsverfahrens eines gleichförmig zufälligen ersten Vektors (Y), der n erste Elemente (y₀, ..., yₙ₋₁) aufweist, wobei n eine ganze Zahl gleich oder größer als zwei ist, wobei jedes erste Element in einer endlichen Menge T enthalten ist, wobei das Verfahren Folgendes aufweist:
- Erzeugen eines zweiten gleichförmig zufälligen Vektors (A), der n zweite Elemente (a₀, ..., aₙ₋₁) aufweist;
- Erzeugen von m dritten Elementen (r; r₀, ..., rₙ₋₁), wobei m eine ganze Zahl gleich oder größer als eins ist;
- Erzeugen von m dritten gleichförmig zufälligen Vektoren (B; B₀, ..., Bₘ₋₁), geordnet von null bis m-1, wobei ein dritter gleichförmiger zufälliger Vektor (Bₖ) mit dem Rang k, wobei k eine ganze Zahl ist, die zwischen null und m-1 enthalten ist, k dritte Elemente und n-k zweite Elemente aufweist, wobei jeder dritte gleichförmig zufällige Vektor (B; B₀, ..., Bₘ₋₁) dritte Elemente (b₀, ..., bₙ₋₁; bi₀, ..., bᵢₙ₋₁) aufweist, die sich von den zweiten Elementen an der gleichen Position im zweiten gleichförmig zufälligen Vektor (A) und den anderen dritten gleichförmig zufälligen Vektoren (B; B₀, ..., Bₘ₋₁) unterscheiden;
**dadurch gekennzeichnet, dass** er ferner den folgenden Schritt aufweist:
- Berechnen der ersten Elemente (y₀, ..., yₙ₋₁) durch Anwenden einer Demaskierungsfunktion auf die zweiten Elemente (a₀, ..., aₙ₋₁) und auf die m dritten Elemente (b₀, ..., bₙ₋₁; bi₀, ..., biₙ₋₁).

3. Verfahren nach Anspruch 1 oder Einrichtung nach Anspruch 2, wobei der Erzeugungsschritt des dritten gleichförmig zufälligen Vektors (B; Bₖ) mit dem Rang k die folgenden Schritte aufweist:
- Verwenden der n ersten Elemente (a₀, ..., aₙ₋₁);
- Verschieben der n ersten Elemente um wenigstens k Schritte;
- Ersetzen von wenigstens k Elementen der ersten Elemente (a₀, ..., aₙ₋₁) durch k Elemente der dritten Elemente (r; r₀, ..., rₙ₋₁).

4. Verfahren nach Anspruch 1 oder 3, oder Einrichtung nach Anspruch 2 oder 3, wobei jedes erste, zweite und dritte Element in einer endlichen Menge gewählt wird.

5. Verfahren nach einem der Ansprüche 1, 3 oder 4, oder Einrichtung nach einem der Ansprüche 2 bis 4, wobei der erste Vektor ein Commitment-Vektor des Dilithium-Algorithmus ist.

6. Ein Ausführungsverfahren eines kryptographischen Algorithmus, das das Erzeugungsverfahren nach einem der Ansprüche 1, 3 bis 5 aufweist.

7. Verfahren nach Anspruch 6, wobei der kryptographische Algorithmus ein Signaturverfahren ist.

8. Verfahren nach Anspruch 6 oder 7, wobei der kryptographische Algorithmus der Dilithium-Algorithmus ist.

## Revendications

1. Procédé de génération, adapté à être exécuté par un dispositif électronique, d'un premier vecteur uniformément aléatoire (Y) comprenant n premiers éléments (y0, ..., yn-1), n étant un entier égal ou supérieur à deux, chaque premier élément étant compris dans un ensemble fini T, comprenant les étapes suivantes :
- la génération d'un deuxième vecteur uniformément aléatoire (A) comprenant n deuxièmes éléments (a0, ..., an-1) ;
- la génération de m troisièmes éléments (r ; r0, ..., rm-1), m étant un entier égal ou supérieur à un ;
- la génération de m troisièmes vecteurs uniformément aléatoires (B ; B0, ..., Bm-1), ordonnés de zéro à m-1, dans lequel le troisième vecteur uniformément aléatoire (Bk) de rang k, k étant un entier compris entre zéro et m-1, comprend k troisièmes éléments et n-k deuxièmes éléments, chaque troisième vecteur uniformément aléatoire (B ; B0, ..., Bm-1) ayant des troisièmes éléments (b0, ..., bn-1 ; bi0, ..., bin-1) différents des deuxièmes éléments à la même position dans le deuxième vecteur uniformément aléatoire (A) et les autres troisièmes vecteurs uniformément aléatoires (B ; B0, ..., Bm-1) ;
**caractérisé en ce qu'**il comprend, en outre, l'étape suivante :
- le calcul desdits premiers éléments (y0, ..., yn-1) en appliquant une fonction de démasquage auxdits deuxièmes éléments (a0, ..., an-1) et auxdits m troisièmes éléments. (b0, ..., bn-1 ; bi0, ..., bin-1).

2. Dispositif électronique adapté à exécuter un procédé de génération d'un premier vecteur uniformément aléatoire (Y) comprenant n premiers éléments (y0, ..., yn-1), n étant un entier égal ou supérieur à deux, chaque premier élément étant compris dans un ensemble fini T, comprenant les étapes suivantes :
- la génération d'un deuxième vecteur uniformément aléatoire (A) comprenant n deuxièmes éléments (a0, ..., an-1) ;
- la génération de m troisièmes éléments (r ; r0, ..., rm-1), m étant un entier égal ou supérieur à un ;
- la génération de m troisièmes vecteurs uniformément aléatoires (B ; B0, ..., Bm-1), ordonnés de zéro à m-1, dans lequel le troisième vecteur uniformément aléatoire (Bk) de rang k, k étant un entier compris entre zéro et m-1, comprend k troisièmes éléments et n-k deuxièmes éléments, chaque troisième vecteur uniformément aléatoire (B ; B0, ..., Bm-1) ayant des troisièmes éléments (b0, ..., bn-1 ; bi0, ..., bin-1) différents des deuxièmes éléments à la même position dans le deuxième vecteur uniformément aléatoire (A) et les autres troisièmes vecteurs uniformément aléatoires (B ; B0, ..., Bm-1) ;
**caractérisé en ce qu'**il comprend, en outre, l'étape suivante :
- le calcul desdits premiers éléments (y0, ..., yn-1) en appliquant une fonction de démasquage auxdits deuxièmes éléments (a0, ..., an-1) et auxdits m troisièmes éléments. (b0, ..., bn-1 ; bi0, ..., bin-1).

3. Procédé selon la revendication 1 ou dispositif selon la revendication 2, dans lequel l'étape de génération dudit troisième vecteur uniformément aléatoire (B ; Bk) de rang k comprend les étapes suivantes :
- l'utilisation des n premiers éléments (a0, ..., an-1) ;
- le décalage desdits n premiers éléments d'au moins k rangs ;
- le remplacement d'au moins k éléments parmi les premiers éléments par k éléments (a0, ..., an-1) parmi les troisièmes éléments (r0, ..., rm-1).

4. Procédé selon la revendication 1 ou 3 ou dispositif selon la revendication 2 ou 3, dans lequel, chaque premier, deuxième et troisième élément est choisi dans un ensemble fini.

5. Procédé selon l'une quelconque des revendications 1, 3 ou 4 ou dispositif selon la revendication 2 à 4, dans lequel ledit premier vecteur est un vecteur d'engagement de l'algorithme Dilithium.

6. Procédé d'exécution d'un algorithme cryptographique comprenant ledit procédé de génération selon l'une quelconque des revendications 1, 3 à 5.

7. Procédé selon la revendication 6, dans lequel ledit algorithme cryptographique est un procédé de signature.

8. Procédé selon la revendication 6 ou 7, dans lequel ledit algorithme cryptographique est l'algorithme Dilithium.
